# EUROPÄISCHE PATENTSCHRIFT

(11) **EP 2 845 299 B1**
(45) Veröffentlichungstag und Bekanntmachung des Hinweises auf die Patenterteilung: **18.05.2016**
(21) Anmeldenummer: 13716261.6
(22) Anmeldetag: 05.04.2013
(51) Int. Cl.: H02K 11/00, H02K 5/15, H02K 5/16, H02K 11/02

(54) **GLEICHSTROMMOTOR ZUM ANTRIEB VON AGGREGATEN EINES KRAFTFAHRZEUGS**
DC MOTOR FOR DRIVING ASSEMBLIES OF A MOTOR VEHICLE
MOTEUR À COURANT CONTINU POUR ENTRAÎNER DES ORGANES D'UN VÉHICULE AUTOMOBILE

(30) Priorität: 04.05.2012 DE 102012103928
(43) Veröffentlichungstag der Anmeldung: 11.03.2015
(73) Patentinhaber: Pierburg GmbH, 41460 Neuss (DE)
(72) Erfinder: BÜRGER, Frank, 52379 Langerwehe (DE); SIMONS, Norbert, 40233 Düsseldorf (DE); SOGLOWEK, Rafael, 40549 Düsseldorf (DE)
(74) Vertreter: Patentanwälte ter Smitten Eberlein Rütten Partnerschaftsgesellschaft
(86) Internationale Anmeldenummer: PCT/EP2013/057246
(87) Internationale Veröffentlichungsnummer: WO 2013/164156

(56) Entgegenhaltungen:
- DE-A1-102006 026 403
- DE-A1-102007 018 462
- DE-A1-102010 042 072
- JP-A- 2011 125 202
- US-A- 4 384 223

## Beschreibung

Die Erfindung betrifft einen Gleichstrommotor zum Antrieb von Aggregaten eines Kraftfahrzeugs mit einem Gehäuse, welches einen Stator und einen Rotor des Gleichstrommotors radial umgibt und aus einem elektrisch leitenden Material hergestellt ist, einem Lagerschild, welches den Gleichstrommotor axial begrenzt und aus dem zentral eine Antriebswelle des Gleichstrommotors ragt, und aus dem zwei Anschlusskontakte zur Spannungsversorgung des Gleichstrommotors ragen, wobei das Lagerschild aus einem elektrisch nicht leitenden Material hergestellt ist, einer Platine, auf der elektronische Bauteile zur Entstörung angeordnet sind und welche eine zentrale Öffnung aufweist, durch welche die Antriebswelle des Gleichstrommotors ragt, und welche zwei Durchstecköffnungen aufweist, durch die die Anschlusskontakte des Gleichstrommotors ragen und Mitteln zur Herstellung einer Masseverbindung der Platine.

Es ist bekannt, dass durch die Verwendung von Gleichstrommotoren unabhängig davon ob es sich um elektronisch oder über Bürstenbrücken kommutierte Gleichstrommotoren handelt, elektromagnetische Störstrahlungen entstehen, die den Betrieb anderer elektronischer Systeme negativ beeinflussen oder beispielsweise den Rundfunkempfang oder Funkverkehr erschweren. Gleichzeitig existiert auch eine Empfindlichkeit des Systems selbst gegen die Störabstrahlung anderer elektronischer Systeme. Daher ist es insbesondere in der Automobilindustrie üblich, die elektromagnetische Verträglichkeit von elektronischen Bauteilen nachweisen zu müssen. Hierfür werden spezielle Entstörschaltungen verwendet, die üblicherweise aus einer Platine bestehen, auf der Ableitkondensatoren und Entstördrosseln angeordnet werden, die über Leiterbahnen miteinander verbunden sind. Zur Erdung dieser elektronischen Bauteile muss ein Massekontakt hergestellt werden.

So wird in der DE 10 2006 044 304 A1 eine Anordnung einer Entstörschaltung vorgeschlagen, bei der zwei Entstördrosseln und drei Ableitkondensatoren verwendet werden, die derart zueinander ausgerichtet werden, dass die elektromagnetischen Feldlinien einer mit einem Anschlusskontakt des Elektromotors verbundenen Drossel senkrecht auf die elektromagnetischen Feldlinien eines mit dem gleichen Motorkontakt verbundenen Ableitkondensators liegen. Die Verbindung zur Masse erfolgt entweder durch Verlöten der entgegengesetzten Enden der elektrischen Leitungen der Kondensatoren mit dem metallischen Gehäuse des Gleichstrommotors oder durch Einklemmen einer Nase, welche an einer gestanzten Verbindungsleitung ausgebildet ist, zwischen einer Endkappe und dem Lagerschild des Gleichstrommotors.

Des Weiteren wird in der DE 10 2009 010 424 A1 ein Kfz-Aggregat-Elektromotor mit einer Platine offenbart, auf der Drosselspulen und Ableitkondensatoren als Entstörelemente angeordnet sind, wobei die Platine auf der Rückseite eines Kunststoffkörpers angeordnet Ist, der als Abschlussplatte dient. Der Massekontakt wird über in dem Kunststoffkörper vergossene Leiterbahnen erzeugt, die mit der Platine verbunden sind und zu Kontaktzungen geführt sind, die mit dem metallischen Gehäuse verbunden sind, wobei die Kontaktzungen Löcher aufweisen, durch die Schrauben ragen, über die die Verbindung zwischen den Kontaktzungen und den Enden der Leiterbahnen hergestellt wird.

Entsprechend ist es bei den bekannten Gleichstrommotoren zur Herstellung einer Masseverbindung der Entstörbauteile erforderlich, die Leiterbahnen am Gehäuse des Gleichstrommotors festzuschrauben oder festzulöten. Klemmverbindungen sind in den bekannten Ausführungen nur möglich, wenn das Lagerschild als Massekontakt dienen kann, also elektrisch leitend ausgebildet ist.

Zusätzlich ist aus der DE 10 2007 018 462 A1 ein Gleichstrommotor bekannt, dessen Motorkontakte radial aus dem Polrohr geführt sind, so dass das Lagerschild ausschließlich eine Öffnung für die Motorwelle aufweist. Die Entstörung des Gleichstrommotors erfolgt über einen Durchführungskondensator, der an einer Bürstenbrücke befestigt ist und durch ein Blech kontaktiert wird, welches zum Teil das Polrohr zur Masseverbindung umgreift. Zum Austausch dieses Durchführungskondensator müsste entsprechend der gesamte Motor demontiert werden.

Es ist daher Aufgabe der Erfindung, einen Gleichstrommotor zum Antrieb von Aggregaten eines Kraftfahrzeugs zu schaffen, bei dem die Massekontaktierung auch bei Verwendung von Lagerschilden aus Kunststoff auf einfache Weise ohne erhöhten Montageaufwand möglich Ist.

Diese Aufgabe wird durch einen Gleichstrommotor mit den Merkmalen des Hauptanspruchs gelöst.

Dadurch, dass als Mittel zur Herstellung der Masseverbindung der Platine axial zwischen der Platine mit den elektronischen Bauteilen zur Entstörung und dem Lagerschild ein Blech angeordnet ist, welches ein erstes Kontaktelement zur Verbindung mit dem Gehäuse und ein zweites Kontaktelement zur Verbindung mit Leiterbahnen der Platine aufweist, kann die Masseverbindung durch ein einfaches aufeinander folgendes Aufsetzen des Bleches und der Platine auf das Lagerschild des Gleichstrommotors erzeugt werden. Dies führt zu einer einfachen Montage ohne die Notwendigkeit folgender Befestigungsschritte. Vorzugsweise ist das Blech ein Stanz-Biegeteil, welches ein flächiges Grundblech aufweist, das auf dem Lagerschild aufliegt und von dessen radialen Randbereich aus sich das erste Kontaktelement im Wesentlichen in axialer Richtung zum Gehäuse erstreckt und das zweite Kontaktelement im Wesentlichen in axialer Richtung zur Platine erstreckt. Ein derartiges Bauteil ist kostengünstig herzustellen und eignet sich für eine einfache Spring-Fix Befestigung des zweiten Kontaktelementes an der Platine.

In einer besonders vorteilhaften Ausbildung der Erfindung weist das erste Kontaktelement einen ersten sich axial erstreckenden Abschnitt auf, der in eine Ausnehmung des Lagerschildes ragt, einen zweiten sich radial erstreckenden Abschnitt aufweist, der axial gegen ein durch die Ausnehmung am Lagerschild freies Ende des Gehäuses anliegt und einen dritten sich axial erstreckenden Abschnitt aufweist, der radial gegen das Gehäuse anliegt. So kann ohne Befestigungsmittel verwenden zu müssen eine zweifache Verbindung des Bleches mit dem Gehäuse hergestellt werden, da einerseits durch das Aufsetzen des Platine der radiale Abschnitt gegen das Masse bildende Gehäuse gedrückt wird und andererseits der dritte Abschnitt sich entlang des Gehäuses erstreckt, so dass bei entsprechender Auslegung auch eine radiale Klemmkraft erzeugt werden kann.

In einer bevorzugten Ausbildung weist das Blech zwei erste Kontaktelemente auf, welche sich in Richtung zum Gehäuse erstrecken, so dass das Gehäuse zwischen die beiden Kontaktelemente geklemmt werden kann.

In einer hierzu weiterführenden Ausführungsform sind die beiden ersten Kontaktelemente Im Wesentlichen radial gegenüberliegend angeordnet und liegen nach radial innen vorgespannt gegen das Gehäuse an. Die hierzu notwendige Federkraft lässt sich erzeugen, indem entweder der Abstand der beiden ersten Kontaktelemente geringfügig kleiner gewählt wird als der Durchmesser des Gehäuses oder beim Biegen der Kontaktelemente diese um mehr als 90° zum Grundkörper gebogen werden, so dass bei der Montage die Kontaktelemente zunächst geringfügig auseinander gedrückt werden müssen. Es ergibt sich eine haltbare Befestigung ohne zusätzliche Bauteile.

Vorzugsweise ist das zweite Kontaktelement über eine Schneid-Klemmverbindung elektrisch leitend mit der Platine verbunden. Neben der einfachen Herstellbarkeit weist diese Verbindung auch eine lange Haltbarkeit auf.

In einer weiteren vorteilhaften Ausbildung weist das Lagerschild einen zentralen sich axial erstreckenden zylinderförmigen Vorsprung auf, der durch eine zentrale Öffnung des Bleches ragt, von der aus sich zumindest zwei Nasen in Richtung des Vorsprunges erstrecken, die reibschlüssig gegen eine Seitenwand des Vorsprungs anliegen. Bei Aufschieben des Bleches wird somit eine Klemmverbindung zum Lagerschild über die Nasen hergestellt, so dass eine axiale Verschiebung des Bleches weitestgehend ausgeschlossen ist.

Um auch ein Drehen des Bleches auf dem Lagerschild zu verhindern und entsprechend dessen Winkellage festzulegen weist das Lagerschild einen dezentral angeordneten sich axial erstreckenden Vorsprung auf, der durch eine Öffnung des Bleches ragt. Dies erleichtert die Montage.

Um die elektromagnetische Verträglichkeit des Gleichstrommotors sicherzustellen, sind als elektronische Bauteile zur Entstörung auf der Platine zumindest zwei Entstördrosseln angeordnet. Die Schaltung auf der Platine lässt sich durch Ableitkondensatoren sinnvoll ergänzen.

Ein derartig aufgebauter Gleichstrommotor mit Entstörschaltung ist mit sehr geringem Aufwand durch einfache Stecken zu montieren. Gleichzeitig wird eine zuverlässige Massekontaktierung der Entstörbauteile sichergestellt. Auf ein Löten, Schweißen Clipsen oder Schrauben kann vollständig verzichtet werden, wodurch Herstell- und Materialkosten verringert werden.

Ein Ausführungsbeispiel ist in den Zeichnungen dargestellt und wird nachfolgend beschrieben.
Figur 1 zeigt eine perspektivische Ansicht eines Bleches für einen erfindungsgemäßen Gleichstrommotor.
Figur 2 zeigt einen erfindungsgemäßen Gleichstrommotor mit aufgesetztem Blech in perspektivischer Darstellung.
Figur 3 zeigt den Gleichstrommotor aus Figur 1 mit aufgesetzter Platine in perspektivischer Darstellung.

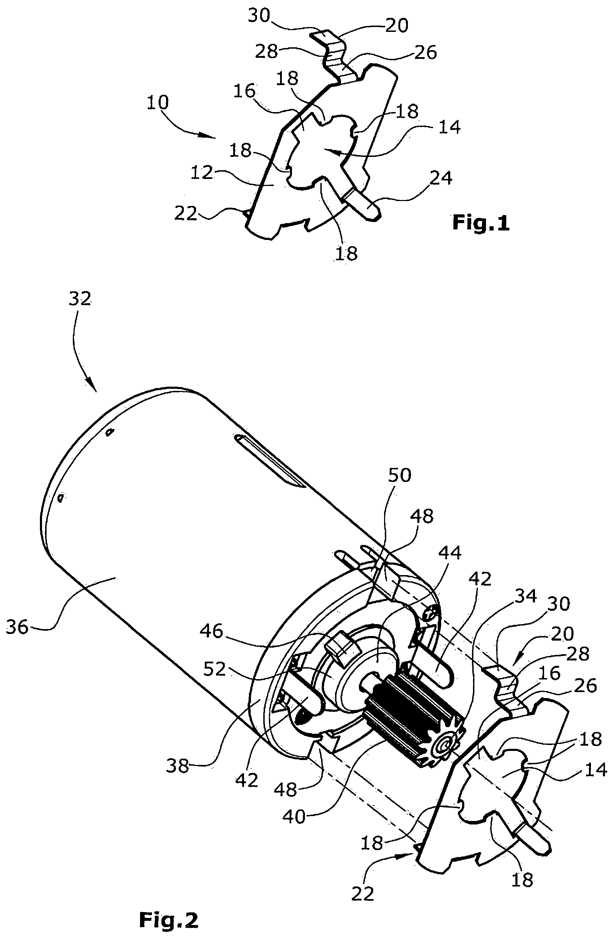

Die Figur 1 zeigt ein Blech 10, welches durch einen Stanz- Biegeprozess hergestellt wurde. Es besteht aus einem Grundblech 12 mit einer zentralen im Wesentlichen kreisförmigen Öffnung 14, welche an einer Seite so erweitert ist, dass zusätzlich eine dezentrale Öffnung 16 In Form eines Rechtecks sich von der kreisförmigen Öffnung 14 aus erstreckt. Vom radial inneren Rand des Grundblechs 12 erstrecken sich um 90° versetzt zueinander vier Nasen 18 nach radial innen in die kreisförmige Öffnung 14.

Von einem radial äußeren Randbereich des Grundblechs 12 aus erstrecken sich im vorliegenden Ausführungsbeispiel insgesamt drei Kontaktelemente 20, 22, 24 in axialer Richtung. Zwei erste Kontaktelemente 20, 22, sind im Wesentlichen um 180° versetzt zueinander angeordnet und erstrecken sich parallel zueinander in eine erste axiale Richtung. Beide ersten Kontaktelemente 20, 22 weisen einen ersten Abschnitt 26 auf, der sich axial erstreckt und von dem aus sich ein zweiter Abschnitt 28 nach radial außen erstreckt, der somit um 90° zum ersten Abschnitt 26 gebogen ist. Vom zweiten Abschnitt 28 aus erstreckt sich ein dritter Abschnitt 30 wiederum um 90° gebogen zum zweiten Abschnitt 28 in gleicher Erstreckungsrichtung wie der erste Abschnitt 26. Das zweite Kontaktelement 24 erstreckt sich vom Grundblech 12 aus axial in entgegengesetzter Richtung.

In Figur 2 ist die Lage des Bleches 10 auf einem Gleichstrommotor 32 dargestellt. Der Gleichstrommotor 32 besteht aus einem auf einer Antriebswelle 34 angeordneten in den Figuren nicht dargestellten Rotor sowie einem Stator, welche in einem im vorliegenden Ausführungsbeispiel als Polrohr ausgeführten Gehäuse 36 angeordnet sind. Dieses Gehäuse 36 ist aus einem elektrisch leitenden Metall hergestellt, welches den Stator und den Rotor radial umgibt.

Die Frontseite des Gleichstrommotors 32, also das axiale Ende, aus dem die Antriebswelle 34 ragt, ist durch ein Lagerschild 38 aus Kunststoff verschlossen. Auf dem axialen Ende der Antriebswelle 34 ist ein Ritzel 40 befestigt, welches beispielsweise in ein Zahnrad eines folgenden Getriebes einer Stellvorrichtung greift. Neben der Antriebswelle 34 ragen zwei Anschlusskontakte 42 des Stators durch das Lagerschild 38 nach außen.

Das Lagerschild 38 ist im Wesentlichen kreisförmig ausgebildet und weist einen sich axial erstreckenden zylindrischen Vorsprung 44 auf, an welchen sich an einer Seite ein dezentraler gleich hoher quaderförmiger Vorsprung 46 anschließt. Des Weiteren befinden sich gegenüberliegend zueinander am radialen Endbereich des Lagerschildes 38 zwei Ausnehmungen 48 durch die jeweils ein axiales Ende 50 des Gehäuses 36 freigelegt wird.

Wird nun das Blech 10 auf das Lagerschild 38 gedrückt, ragt der zylinderförmige Vorsprung 44 durch die zentrale Öffnung 14 des Bleches, deren Durchmesser nur unwesentlich größer ist als der Durchmesser des zylinderförmigen Vorsprungs 44, so dass durch die Nasen 18 ein Reibschluss zu den Seitenwänden 52 des zylindrischen Vorsprungs 44 hergestellt wird. So wird ein axiales Verschieben des Bleches 10 relativ zum Lagerschild 38 verhindert.

Zur Festlegung der Winkellage des Bleches 10 auf dem Lagerschild 38 dient der quaderförmige dezentrale Vorsprung 46, der im Wesentlichen die gleiche Form aufweist wie die dezentrale Öffnung 16 des Bleches 10, durch die nach dem Aufschieben des Bleches 10 der dezentrale Vorsprung 46 ragt. So wird auch die Lage der beiden ersten Kontaktelemente 20, 22 zum Lagerschild 38 festgelegt, die in dieser Position mit ihren ersten Abschnitten 26 in die beiden Ausnehmungen 48 am radial äußeren Bereich des Lagerschildes 38 greifen. Wird das Blech 10 gegen das Lagerschild 38 gedrückt wird somit auch das jeweilige Kontaktelement 20, 22 mit seinem sich radial erstreckenden zweiten Abschnitt 28 gegen das jeweilige freie Ende 50 des Gehäuses 36 gedrückt. Der jeweilige dritte Abschnitt 30 sollte von radial außen gegen das Gehäuse 36 anliegen. Um diese Anlage sicherzustellen, können die Kontaktelemente 20, 22 zumindest beim Übergang vom zweiten Abschnitt 28 zum dritten Abschnitt 30 um etwas mehr als 90° umgebogen werden. Bei einer solche Ausführung liegen die dritten Abschnitte 30 unter Vorspannung mit einer Federkraft von außen gegen das Gehäuse 36 an. Da sie um 180° versetzt zueinander angeordnet sind, wird somit das Gehäuse 36 in entgegengesetzter Richtung durch die Federkraft belastet, so dass das Gehäuse 36 zwischen die Kontaktelemente 20, 22 geklemmt wird.

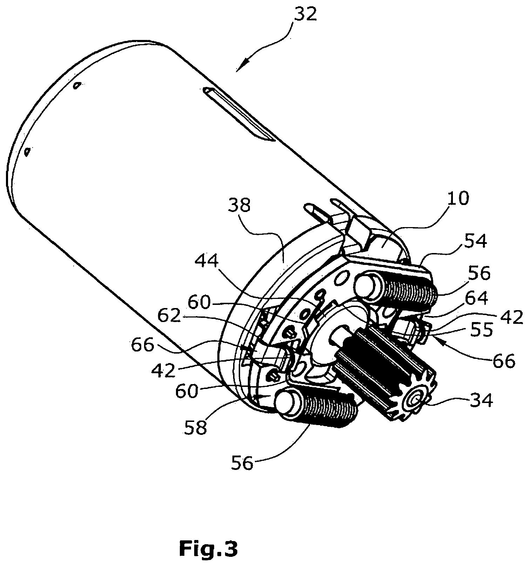

Aus Figur 3 ist ersichtlich, dass über das Blech 10 eine Platine 54 mit einer zentralen Öffnung 55 gestülpt wird, durch die die Antriebswelle 34 des Gleichstrommotors 32 sowie die Vorsprünge 44, 46 des Lagerschildes 38 ragen. Auf der Platine 54 sind zwei parallel zueinander angeordnete Entstördrosseln 56 sowie drei Kondensatoren 58 angeordnet, welche über Leiterbahnen 60 miteinander verbunden sind. Die Drosseln 56 und die Kondensatoren 58 dienen als Bauteile zur Entstörung also zur Verbesserung der elektromagnetischen Verträglichkeit des Gleichstrommotors 32.

Die Verschaltung zur Entstörung ist auf der Platine 54 ausgebildet und besteht aus zwei Strängen, über die die Motorkontakte 42 jeweils über eine Entstördrossel 56 mit einer Spannungsquelle verbunden sind. Diese beiden Stränge sind über eine Parallelschaltung eines Kondensators 58 mit einer Reihenschaltung aus zwei Kondensatoren 58 und einer Reihenschaltung zweier Widerstände miteinander verbunden. Zwischen den beiden Kondensatoren 58 und den beiden Widerständen zweigt eine Leiterbahn 60 ab, die auf Masse geführt wird.

Die Verbindung zur Masse, die durch das Gehäuse 36 gebildet wird sowie zum Gleichstrommotor 32, erfolgt über drei Durchstecköffnungen 62, 64, durch die jeweils die Anschlusskontakte 42 des Gleichstrommotors 32 und das zweite Kontaktelement 24 des Bleches 10 von der Seite des Lagerschildes 38 aus ragen. An diesen Durchstecköffnungen 62, 64 ist jeweils ein Omega-Kontakt 66 ausgebildet, der einerseits mit den Leiterbahnen 60 der Platine 54 verbunden ist und andererseits das zweite Kontaktelement 24 und die Anschlusskontakte 42 zur elektrischen Verbindung in bekannter Weise einklemmt.

Es ist ersichtlich, dass das Blech 10 als Mittel zur Herstellung einer Masseverbindung der Platine dient und so durch einfaches Aufstecken eine zuverlässige Masseanbindung der Entstörschaltung hergestellt werden kann, ohne dabei zusätzliche Bauteile verwenden zu müssen. Auch zusätzliche Montageschritte, in denen geschraubt, geschweißt oder gelötet werden muss, entfallen, was auch die mechanische oder thermische Belastung bei der Montage herabsetzt.

Es sollte deutlich sein, dass der Schutzbereich nicht auf das beschriebene Ausführungsbeispiel begrenzt ist. Konstruktive Änderungen des Blechdesigns oder andere Verschaltungen zur Entstörung sind selbstverständlich möglich, ohne den Schutzbereich der Ansprüche zu verlassen.

## Patentansprüche

1. Gleichstrommotor (32) zum Antrieb von Aggregaten eines Kraftfahrzeugs mit
einem Gehäuse (36), welches einen Stator und einen Rotor des Gleichstrommotors (32) radial umgibt und aus einem elektrisch leitenden Material hergestellt ist,
einem Lagerschild (38), welches den Gleichstrommotor (32) axial begrenzt und aus dem zentral eine Antriebswelle (34) des Gleichstrommotors (32) ragt, und aus dem zwei Anschlusskontakte (42) zur Spannungsversorgung des Gleichstrommotors (32) ragen, wobei das Lagerschild (38) aus einem elektrisch nicht leitenden Material hergestellt ist,
einer Platine (54), auf der elektronische Bauteile (56, 58) zur Entstörung angeordnet sind und welche eine zentrale Öffnung (55) aufweist, durch welche die Antriebswelle (34) des Gleichstrommotors (32) ragt und welche zwei Durchstecköffnungen (64) aufweist, durch die die Anschlusskontakte (42) des Gleichstrommotors (32) ragen und
Mitteln (10) zur Herstellung einer Masseverbindung der Platine (54),
**dadurch gekennzeichnet, dass**
als Mittel zur Herstellung der Masseverbindung der Platine (54) axial zwischen der Platine (54) mit den elektronischen Bauteilen (56, 58) zur Entstörung und dem Lagerschild (38) ein Blech (10) angeordnet ist, welches ein erstes Kontaktelement (20; 22) zur Verbindung mit dem Gehäuse (36) und ein zweites Kontaktelement (24) zur Verbindung mit Leiterbahnen (60) der Platine (54) aufweist.

2. Gleichstrommotor zum Antrieb von Aggregaten eines Kraftfahrzeugs nach Anspruch 1,
**dadurch gekennzeichnet, dass**
das Blech (10) ein Stanz-Biegeteil ist, welches ein flächiges Grundblech (12) aufweist, das auf dem Lagerschild (38) aufliegt und von dessen radialen Randbereich aus sich das erste Kontaktelement (20; 22) im Wesentlichen in axialer Richtung zum Gehäuse (36) und das zweite Kontaktelement (24) im Wesentlichen in axialer Richtung zur Platine (54) erstrecken.

3. Gleichstrommotor zum Antrieb von Aggregaten eines Kraftfahrzeugs nach einem der Ansprüche 1 oder 2,
**dadurch gekennzeichnet, dass**
das erste Kontaktelement (20; 22) einen ersten sich axial erstreckenden Abschnitt (26) aufweist, der in eine Ausnehmung (48) des Lagerschildes (38) ragt, einen zweiten sich radial erstreckenden Abschnitt (28) aufweist, der axial gegen ein durch die Ausnehmung (48) am Lagerschild (38) freies Ende (50) des Gehäuses (36) anliegt und einen dritten sich axial erstreckenden Abschnitt (30) aufweist, der radial gegen das Gehäuse (36) anliegt.

4. Gleichstrommotor zum Antrieb von Aggregaten eines Kraftfahrzeugs nach einem der vorhergehenden Ansprüche,
**dadurch gekennzeichnet, dass**
das Blech (10) zwei erste Kontaktelemente (20, 22) aufweist, welche sich in Richtung zum Gehäuse (36) erstrecken.

5. Gleichstrommotor zum Antrieb von Aggregaten eines Kraftfahrzeugs nach Anspruch 4,
**dadurch gekennzeichnet, dass**
die beiden ersten Kontaktelemente (20, 22) im Wesentlichen radial gegenüberliegend angeordnet sind und nach radial innen vorgespannt gegen das Gehäuse (36) anliegen.

6. Gleichstrommotor zum Antrieb von Aggregaten eines Kraftfahrzeugs nach einem der vorhergehenden Ansprüche,
**dadurch gekennzeichnet, dass**
das zweite Kontaktelement (24) über einen Omega-Kontakt (66) oder eine Schneid-Klemmverbindung elektrisch leitend mit der Platine (54) verbunden ist.

7. Gleichstrommotor zum Antrieb von Aggregaten eines Kraftfahrzeugs nach einem der vorhergehenden Ansprüche,
**dadurch gekennzeichnet, dass**
das Lagerschild (38) einen zentralen sich axial erstreckenden zylinderförmigen Vorsprung (44) aufweist, der durch eine zentrale Öffnung (14) des Bleches (10) ragt, von der aus sich zumindest zwei Nasen (18) in Richtung des Vorsprunges (44) erstrecken, die reibschlüssig gegen eine Seitenwand (52) des Vorsprungs (44) anliegen.

8. Gleichstrommotor zum Antrieb von Aggregaten eines Kraftfahrzeugs nach Anspruch 6,
***dadurch* gekennzeichnet, dass**
das Lagerschild (38) einen dezentral angeordneten sich axial erstreckenden Vorsprung (46) aufweist, der durch eine dezentrale Öffnung (16) des Bleches (10) ragt.

9. Gleichstrommotor zum Antrieb von Aggregaten eines Kraftfahrzeugs nach einem der vorhergehenden Ansprüche,
**dadurch gekennzeichnet, dass**
als elektronische Bauteile zur Entstörung auf der Platine (54) zumindest zwei Entstördrosseln (56) angeordnet sind.

## Claims

1. A DC motor (32) for driving components of a motor vehicle comprising
a housing (36) which radially surrounds a stator and a rotor of the DC motor (32) and which is produced from an electrically conductive material,
a bearing shield (38) which axially bounds the DC motor (32) and out of the centre of which a drive shaft (34) of the DC motor (32) projects, and out of which two connection contacts (42) for supplying voltage to the DC motor (32) project, wherein the bearing shield (38) is produced from an electrically non-conductive material,
a printed circuit board (54) on which electronic components (56, 58) for interference-suppression are arranged and which has a central opening (55) through which the drive shaft (34) of the DC motor (32) projects and which has two plug-through openings (64) through which the connection contacts (42) of the DC motor (32) project, and
means (10) for producing an earth connection of the printed circuit board (54)
**characterized in that**
as means for producing the earth connection of the printed circuit board (54), a metal sheet (10) is arranged axially between the printed circuit board (54) having the electronic components (56, 58) for interference-suppression and the bearing shield (38), said metal sheet having a first contact element (20; 22) for connection to the housing (36) and having a second contact element (24) for connection to conductor paths (60) of the printed circuit board (54).

2. The DC motor for driving components of a motor vehicle of claim 1, **characterized in that** the metal sheet (10) is a stamped and bent part having a two-dimensional base sheet (12) resting on the bearing shield (38) and from the radial edge portion of which the first contact element (20; 22) extends substantially axially towards the housing (36) and the second contact element (24) extends substantially axially towards the printed circuit board (54).

3. The DC motor for driving components of a motor vehicle of one of claims 1 to 2, **characterized in that** the first contact element (20; 22) has a first, axially extending section (26) protruding into a recess (48) in the bearing shield (38), a second, radially extending section (28) resting axially on a free end (50) of the housing (36) through the recess (48) in the bearing shield (38), and a third, axially extending section (30) that contacts the housing (36) radially.

4. The DC motor for driving components of a motor vehicle of one of the preceding claims, **characterized in that** the metal sheet (10) comprises two first contact elements (20, 22) that extend towards the housing (36).

5. The DC motor for driving components of a motor vehicle of claim 4, **characterized in that** the two first contact elements (20; 22) are arranged substantially radially opposite each other and abut against the housing (36) with a radially inward directed bias.

6. The DC motor for driving components of a motor vehicle of one of the preceding claims, **characterized in that** the second contact element (24) is electrically connected with the printed circuit board (54) via an omega contact (66) or an insulation displacement connection.

7. The DC motor for driving components of a motor vehicle of one of the preceding claims, **characterized in that** the bearing shield (38) has a central, axially extending cylindrical protrusion (44) that projects through a central opening (14) in the metal sheet (10), from which opening at least two noses (18) extend towards the protrusion (44), the noses being in frictional engagement with a side wall (52) of the protrusion (44).

8. The DC motor for driving components of a motor vehicle of claim 8, **characterized in that** the bearing shield (38) has an off-centre, axially extending protrusion (46) projecting through an opening (16) in the metal sheet (10).

9. The DC motor for driving components of a motor vehicle of one of the preceding claims, **characterized in that** at least two interference-suppression chokes (56) are arranged on the printed circuit board (54) as electronic components for interference suppression purposes.

## Revendications

1. Moteur à courant continu (32) pour entraîner des organes d'un véhicule automobile, comprenant
un carter (36) radialement entourant un stator et un rotor du moteur à courant continu (32) et réalisé en matière conductrice,
une flasque (38) axialement délimitant le moteur à courant continu (32) et de laquelle un arbre d'entrainement (34) du moteur à courant continu (32) saille centralement, et de laquelle saillent deux bornes (42) pour l'alimentation en tension dudit moteur à courant continu (32), ladite flasque (38) étant réalisée en matière non-conductrice,
une platine (54), sur laquelle sont disposés des éléments électroniques (56, 58) pour le déparasitage et qui comprend une ouverture centrale (55) à travers laquelle saille l'arbre d'entrainement (34) dudit moteur à courant continu (32), et qui comprend deux ouvertures d'emboîtement (64) à travers lesquelles saillent les bornes (42) dudit moteur à courant continu (32), et
des moyens (10) pour réaliser la mise à la masse de la platine (54),
**caractérisé en ce que**
comme moyen de réalisation de la mise à la masse de la platine (54), une tôle (10) est disposée axialement entre la platine (54) avec les éléments électroniques (56, 58) de déparasitage et la flasque (38), ladite tôle ayant un premier élément de contact (20; 22) pour connexion avec le carter (36) et un deuxième élément de contact (24) pour connexion à des pistes conductrices (60) de la platine (54).

2. Moteur à courant continu pour entraîner des organes d'un véhicule automobile selon la revendication 1, **caractérisé en ce que** la tôle (10) est un élément estampé et plié avec une tôle de base (12) plate restant sur la flasque (38), à partir de la partie périphérique radiale de laquelle le premier élément de contact (20; 22) s'étend, sensiblement dans la direction axiale, vers le carter (36) et le deuxième élément de contact (24) s'étend, sensiblement dans la direction axiale, vers la platine (54).

3. Moteur à courant continu pour entraîner des organes d'un véhicule automobile selon la revendication 1 ou 2, **caractérisé en ce que** le premier élément de contact (20; 22) présente une première section (26) s'étendant axialement, qui saille dans un renfoncement (48) de la flasque (38), une deuxième section (28) s'étendant radialement, qui reste axialement contre une extrémité libre (50) du carter (36) à travers ledit renfoncement (48) de ladite flasque (38), et une troisième section (30) s'étendant axialement, qui reste radialement contre ledit carter (36).

4. Moteur à courant continu pour entraîner des organes d'un véhicule automobile selon l'une quelconque des revendications précédentes, **caractérisé en ce que** la tôle (10) comprend deux premier éléments de contact (20, 22) s'étendant vers le carter (36).

5. Moteur à courant continu pour entraîner des organes d'un véhicule automobile selon la revendication 4, **caractérisé en ce que** les deux premier éléments de contact (20, 22) sont disposés sensiblement radialement opposés l'un par rapport à l'autre et restent contre le carter (36) de manière précontrainte radialement vers l'intérieur.

6. Moteur à courant continu pour entraîner des organes d'un véhicule automobile selon l'une quelconque des revendications précédentes, **caractérisé en ce que** le deuxième élément de contact (24) est relié de manière électrique à la platine (54) par un contact du type oméga (66) ou une connexion auto-dénudante.

7. Moteur à courant continu pour entraîner des organes d'un véhicule automobile selon l'une quelconque des revendications précédentes, **caractérisé en ce que** la flasque (38) comprend une saillie (44) centrale cylindrique s'étendant axialement, la saillie saillant à travers une ouverture (14) centrale de la tôle (10), au moins deux nez (18) s'étendant à partir de l'ouverture vers la saillie (44), restant, par friction, contre une paroi latérale (52) de la saillie (44).

8. Moteur à courant continu pour entraîner des organes d'un véhicule automobile selon la revendication 6, **caractérisé en ce que** la flasque (38) comprend une saillie (46) décentrée s'étendant axialement et en saillie à travers une ouverture (16) décentrée de ladite tôle (10).

9. Moteur à courant continu pour entraîner des organes d'un véhicule automobile selon l'une quelconque des revendications précédentes, **caractérisé en ce qu'**au moins deux bobines antiparasites (56) sont disposées sur la platine (54) comme éléments électroniques de déparasitage.
